(19) **Europäisches Patentamt / European Patent Office / Office européen des brevets**

(11) **EP 2 785 534 B2**

(12) **NOUVEAU FASCICULE DE BREVET EUROPEEN**
Après la procédure d'opposition

(45) Date de publication et mention de la décision concernant l'opposition:
**31.07.2019 Bulletin 2019/31**

(45) Mention de la délivrance du brevet:
**20.04.2016 Bulletin 2016/16**

(21) Numéro de dépôt: **12787722.3**

(22) Date de dépôt: **15.11.2012**

(51) Int Cl.:
**B60C 1/00** *(2006.01)*      **B60C 11/00** *(2006.01)*

(86) Numéro de dépôt international:
**PCT/EP2012/072782**

(87) Numéro de publication internationale:
**WO 2013/079336 (06.06.2013 Gazette 2013/23)**

(54) **PNEUMATIQUE COMPORTANT UNE BANDE DE ROULEMENT CONSTITUEE DE PLUSIEURS MELANGES ELASTOMERIQUES**

**REIFEN MIT EINER LAUFFLÄCHE AUS MEHREREN ELASTOMERVERBINDUNGEN**

**TIRE COMPRISING A TREAD MADE UP OF SEVERAL ELASTOMERIC COMPOUNDS**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.11.2011 FR 1160899**

(43) Date de publication de la demande:
**08.10.2014 Bulletin 2014/41**

(73) Titulaire: **Compagnie Générale des Etablissements Michelin
63000 Clermont-Ferrand (FR)**

(72) Inventeurs:
 • **GERVAIS, Philippe**
 **63040 Clermont-Ferrand Cedex 9 (FR)**
 • **DURAND, Alain**
 **63040 Clermont-Ferrand Cedex 9 (FR)**

(74) Mandataire: **Le Cam, Stéphane Georges Elie et al
Manufacture Française des
Pneumatiques Michelin
CBS/CORP/J/PI - F35 - Ladoux
23, place des Carmes-Déchaux
63040 Clermont-Ferrand Cedex 9 (FR)**

(56) Documents cités:
EP-A1- 0 767 206       EP-A1- 0 866 092
EP-A1- 1 114 093       EP-A1- 1 897 702
EP-A1- 2 528 754       WO-A1-2009/057587
WO-A2-2011/034585      JP-A- 11 060 810
US-A- 5 046 542        US-A1- 2006 048 874
US-A1- 2011 021 664    US-B1- 6 247 512
US-B2- 9 487 050

• WANG, M. ET AL: Kautschuk Gummi Kunstoffe, 55. Jahrgang, no. 7, August 2002 (2002-08), pages 388-396,

## Description

La présente invention concerne un pneumatique, à armature de carcasse radiale et plus particulièrement un pneumatique destiné à équiper des véhicules portant de lourdes charges et roulant à vitesse soutenue, tels que, par exemple les camions, tracteurs, remorques ou bus routiers.

D'une manière générale dans les pneumatiques de type poids-lourds, l'armature de carcasse est ancrée de part et d'autre dans la zone du bourrelet et est surmontée radialement par une armature de sommet constituée d'au moins deux couches, superposées et formées de fils ou câbles parallèles dans chaque couche et croisés d'une couche à la suivante en faisant avec la direction circonférentielle des angles compris entre 10° et 45°. Lesdites couches de travail, formant l'armature de travail, peuvent encore être recouvertes d'au moins une couche dite de protection et formée d'éléments de renforcement avantageusement métalliques et extensibles, dits élastiques. Elle peut également comprendre une couche de fils ou câbles métalliques à faible extensibilité faisant avec la direction circonférentielle un angle compris entre 45° et 90°, cette nappe, dite de triangulation, étant radialement située entre l'armature de carcasse et la première nappe de sommet dite de travail, formées de fils ou câbles parallèles présentant des angles au plus égaux à 45° en valeur absolue. La nappe de triangulation forme avec au moins ladite nappe de travail une armature triangulée, qui présente, sous les différentes contraintes qu'elle subit, peu de déformations, la nappe de triangulation ayant pour rôle essentiel de reprendre les efforts de compression transversale dont est l'objet l'ensemble des éléments de renforcement dans la zone du sommet du pneumatique.

Dans le cas des pneumatiques pour véhicules "Poids-Lourds", une seule couche de protection est habituellement présente et ses éléments de protection sont, dans la plupart des cas, orientés dans la même direction et avec le même angle en valeur absolue que ceux des éléments de renforcement de la couche de travail radialement la plus à l'extérieur et donc radialement adjacente. Dans le cas de pneumatiques de Génie Civil destinés aux roulages sur sols plus ou moins accidentés, la présence de deux couches de protection est avantageuse, les éléments de renforcement étant croisés d'une couche à la suivante et les éléments de renforcement de la couche de protection radialement intérieure étant croisés avec les éléments de renforcement inextensibles de la couche de travail radialement extérieure et adjacente à ladite couche de protection radialement intérieure.

Radialement à l'extérieur de l'armature de sommet, on trouve la bande de roulement habituellement constituée de matériaux polymériques destinés à venir au contact du sol dans l'aire de contact entre le sol et le pneumatique.

Des câbles sont dits inextensibles lorsque lesdits câbles présentent sous une force de traction égale à 10% de la force de rupture un allongement relatif au plus égal à 0,2%.

Des câbles sont dits élastiques lorsque lesdits câbles présentent sous une force de traction égale à la charge de rupture un allongement relatif au moins égal à 3% avec un module tangent maximum inférieur à 150 GPa.

La direction circonférentielle du pneumatique, ou direction longitudinale, est la direction correspondant à la périphérie du pneumatique et définie par la direction de roulement du pneumatique.

L'axe de rotation du pneumatique est l'axe autour duquel il tourne en utilisation normale.

Un plan radial ou méridien est un plan qui contient l'axe de rotation du pneumatique.

Le plan médian circonférentiel, ou plan équatorial, est un plan perpendiculaire à l'axe de rotation du pneu et qui divise le pneumatique en deux moitiés.

La direction transversale ou axiale du pneumatique est parallèle à l'axe de rotation du pneumatique. Une distance axiale est mesurée selon la direction axiale. L'expression « axialement intérieur à, respectivement axialement extérieur à» signifie « dont la distance axiale mesurée depuis le plan équatorial est inférieure à, respectivement supérieure à ».

La direction radiale est une direction coupant l'axe de rotation du pneumatique et perpendiculaire à celui-ci. Une distance radiale est mesurée selon la direction radiale. L'expression « radialement intérieur à, respectivement radialement extérieur à » signifie « dont la distance radiale mesurée depuis de l'axe de rotation du pneumatique est inférieure à, respectivement supérieure à ».

Certains pneumatiques actuels, dits "routiers", sont destinés à rouler à grande vitesse et sur des trajets de plus en plus longs, du fait de l'amélioration du réseau routier et de la croissance du réseau autoroutier dans le monde. L'ensemble des conditions, sous lesquelles un tel pneumatique est appelé à rouler, permet sans aucun doute un accroissement du nombre de kilomètres parcourus, l'usure du pneumatique étant moindre ; par contre l'endurance de ce dernier et en particulier de l'armature de sommet est pénalisée.

Il existe en effet des contraintes au niveau de l'armature de sommet et plus particulièrement des contraintes de cisaillement entre les couches de sommet, alliées à une élévation non négligeable de la température de fonctionnement au niveau des extrémités de la couche de sommet axialement la plus courte, qui ont pour conséquence l'apparition et la propagation de fissures de la gomme au niveau desdites extrémités. Ce problème existe dans le cas de bords de deux couches d'éléments de renforcement, lesdites couches n'étant pas obligatoirement radialement adjacentes.

Pour limiter des élévations de température trop importantes au niveau du sommet du pneumatique, les matériaux constitutifs de la bande de roulement sont avantageusement choisis avec des pertes hystérétiques adaptées aux conditions de fonctionnement du pneumatique.

Par ailleurs, afin d'améliorer l'endurance de l'armature de sommet du type de pneumatique étudié, des solutions relatives à la structure et qualité des couches et/ou profilés de mélanges caoutchouteux qui sont disposés entre et/ou autour des extrémités de nappes et plus particulièrement des extrémités de la nappe axialement la plus courte ont déjà été apportées.

Le brevet FR 1 389 428, pour améliorer la résistance à la dégradation des mélanges de caoutchouc situés au voisinage des bords d'armature de sommet, préconise l'utilisation, en combinaison avec une bande de roulement de faible hystérésis, d'un profilé de caoutchouc couvrant au moins les côtés et les bords marginaux de l'armature de sommet et constitué d'un mélange caoutchouteux à faible hystérésis.

Le brevet FR 2 222 232, pour éviter les séparations entre nappes d'armature de sommet, enseigne d'enrober les extrémités de l'armature dans un matelas de caoutchouc, dont la dureté Shore A est différente de celle de la bande de roulement surmontant ladite armature, et plus grande que la dureté Shore A du profilé de mélange caoutchouteux disposé entre les bords de nappes d'armature de sommet et armature de carcasse.

La demande française FR 2 728 510 propose de disposer, d'une part entre l'armature de carcasse et la nappe de travail d'armature de sommet, radialement la plus proche de l'axe de rotation, une nappe axialement continue, formée de câbles métalliques inextensibles faisant avec la direction circonférentielle un angle au moins égal à 60°, et dont la largeur axiale est au moins égale à la largeur axiale de la nappe de sommet de travail la plus courte, et d'autre part entre les deux nappes de sommet de travail une nappe additionnelle formée d'éléments métalliques, orientés sensiblement parallèlement à la direction circonférentielle.

La demande française WO 99/24269 propose encore, de part et d'autre du plan équatorial et dans le prolongement axial immédiat de la nappe additionnelle d'éléments de renforcement sensiblement parallèles à la direction circonférentielle, de coupler, sur une certaine distance axiale, les deux nappes de sommet de travail formées d'éléments de renforcement croisés d'une nappe à la suivante pour ensuite les découpler par des profilés de mélange de caoutchouc au moins sur le restant de la largeur commune aux dites deux nappes de travail.

Cette amélioration de l'endurance des pneumatiques permet d'envisager au moins la possibilité d'un rechapage lorsque la bande de roulement est usée. En effet, lorsqu'il est souhaité faire un rechapage du pneumatique après usure de la bande de roulement, il faut être en mesure de rechaper un pneumatique dont le vieillissement n'est pas trop avancé afin d'optimiser l'utilisation de la nouvelle bande de roulement.

Afin d'augmenter encore la durée de vie des pneumatiques, il est usuel de choisir des matériaux polymériques constitutifs de la bande de roulement présentant des propriétés de résistance en usure améliorées. De tels matériaux pénalisant le plus souvent les propriétés hystérétiques, il est encore connu de réaliser la bande de roulement d'un pneumatique par une superposition radiale de deux matériaux différents pour obtenir un compromis des propriétés d'usure et d'hystérèse satisfaisant pour les applications envisagées.

De tels pneumatiques sont par exemple décrits dans le document US 6,247,512. Ce document décrit la superposition de de deux couches de matériaux pour former la bande de roulement, le matériau externe venant au contact du sol étant notamment plus performant en termes d'usure alors que le matériau interne présente des propriétés hystérétiques permettant de limiter les montées en température du pneumatique dans la zone du sommet.

Des pneumatiques ainsi réalisés sont tout à fait satisfaisants pour les applications routières précitées. Pour assurer la possibilité d'effectuer un rechapage, il est toutefois recommandé d'éviter une dégradation trop importante du matériau interne, celui-ci présentant une usure relativement rapide comparée à celle du matériau externe, pour ne pas risquer un endommagement de l'armature du pneumatique.

En conséquence, l'utilisation de la bande de roulement de tels pneumatiques ne peut pas être totalement optimisée au risque de compromettre les possibilités de rechapage du pneumatique.

Le document WO 2009/057857 décrit un pneumatique dont la bande de roulement est constituée de deux mélanges élastomériques radialement superposés dont les valeurs de tan(δ) sont différentes, la couche radialement extérieure ayant la valeur la plus faible.

Le document EP 1897 702 et JP 11 0608 10 décrivent également des pneumatiques dont la bande de roulement est constituée d'au moins deux mélanges élastomériques radialement superposés.

Les inventeurs se sont ainsi donnés pour mission d'être en mesure de fournir des pneumatiques autorisant une distance de roulage toujours plus importante avant d'envisager un rechapage.

Ce but a été atteint selon l'invention par un pneumatique, à armature de carcasse radiale, comprenant une armature de sommet, elle-même coiffée radialement d'une bande de roulement réunie à deux bourrelets par l'intermédiaire de deux flancs, ladite bande de roulement comprenant au moins deux couches de mélange polymérique radialement superposées, une première couche de mélange élastomérique chargé constituant la partie radialement extérieure de la bande de roulement présentant une note Z de macro dispersion supérieure à 80 et une valeur maximale de tan(δ), noté tan(δ)max, inférieure à 0.130 et une deuxième couche de mélange élastomérique, radialement intérieure à la dite première couche de mélange élastomérique, présentant un allongement à la rupture à 60°C supérieure à 600 %.

Selon l'invention, le ratio de la valeur maximale de tan(δ), noté tan(δ)max, du mélange élastomérique constituant la première couche sur la valeur maximale de tan($\delta$), noté tan($\delta$)max, du mélange élastomérique constituant la deuxième couche est strictement inférieure à 1.

Une note Z de macro dispersion supérieure à 80 d'un mélange élastomérique chargé signifie que la charge est dispersée dans la matrice élastomère de la composition avec une note de dispersion Z supérieure ou égale à 80.

Dans la présente description, la dispersion de charge dans une matrice élastomère est caractérisée par la note Z, qui est mesurée, après réticulation, selon la méthode décrite par S. Otto et Al dans Kautschuk Gummi Kunststoffe, 58 Jahrgang, NR 7-8/2005, en accord avec la norme ISO 11345.

Le calcul de la note Z est basé sur le pourcentage de surface dans laquelle la charge n'est pas dispersée (« % surface non dispersée »), telle que mesurée par l'appareil « disperGRADER+ » fourni avec son mode opératoire et son logiciel d'exploitation « disperDATA » par la société Dynisco selon l'équation :

$$Z = 100 - (\text{\% surface non dispersée}) / 0.35$$

Le pourcentage de surface non dispersée est, quant à lui, mesuré grâce à une caméra observant la surface de l'échantillon sous une lumière incidente à 30°. Les points clairs sont associés à de la charge et à des agglomérats, tandis que les points foncés sont associés à la matrice de caoutchouc ; un traitement numérique transforme l'image en une image noir et blanche, et permet la détermination du pourcentage de surface non dispersée, telle que décrite par S.Otto dans le document précité.

Plus la note Z est haute, meilleure est la dispersion de la charge dans la matrice en caoutchouc (une note Z de 100 correspondant à une dispersion parfaite et une note Z de 0 à une dispersion médiocre). On considèrera qu'une note Z supérieure ou égale à 80 correspond à une surface présentant une très bonne dispersion de la charge dans la matrice élastomère.

Les mélanges élastomériques constituant la bande de roulement sont préparés selon des méthodes connues.

Afin d'atteindre une note Z de macrodispersion supérieure à 80, le mélange élastomérique constituant la partie radialement extérieure peut avantageusement être préparé par formation d'un mélange maître d'élastomère diénique et de charge renforçante.

Au sens de l'invention, on entend par « mélange maître » (couramment désigné par son nom anglais « masterbatch »), un composite à base d'élastomère dans lequel a été introduite une charge.

Il existe différentes méthodes pour obtenir un mélange maître d'élastomère diénique et de charge renforçante. En particulier un type de solution consiste, pour améliorer la dispersion de la charge dans la matrice élastomère, à procéder au mélange de l'élastomère et de la charge en phase « liquide ». Pour ce faire, on a fait appel à un élastomère sous forme de latex qui se présente sous forme de particules d'élastomère dispersées dans l'eau, et à une dispersion aqueuse de la charge, c'est-à-dire une charge dispersée dans de l'eau, couramment appelée « slurry ».

Ainsi, selon une des variantes de l'invention, le mélange maître est obtenu par mélangeage en phase liquide à partir d'un latex d'élastomère diénique comprenant du caoutchouc naturel et d'une dispersion aqueuse d'une charge comprenant du noir de carbone.

Plus préférentiellement encore le mélange maître selon l'invention est obtenu selon les étapes de procédé suivantes, permettant l'obtention d'une très bonne dispersion de la charge dans la matrice élastomère:

- alimenter avec un premier flux continu d'un latex d'élastomère diénique une zone de mélange d'un réacteur de coagulation définissant une zone allongée de coagulation s'étendant entre la zone de mélange et une sortie,

- alimenter ladite zone de mélange du réacteur de coagulation avec un second flux continu d'un fluide comprenant une charge sous pression pour former un mélange avec le latex d'élastomère en mélangeant le premier fluide et le second fluide dans la zone de mélange de manière suffisamment énergique pour coaguler le latex d'élastomère avec la charge avant la sortie, ledit mélange s'écoulant comme un flux continu vers la zone de sortie et ladite charge étant susceptible de coaguler le latex d'élastomère, ,

- récupérer à la sortie du réacteur le coagulum obtenu précédemment sous forme d'un flux continu et le sécher afin de récupérer le mélange maître.

Un tel procédé de préparation d'un mélange maître en phase liquide est par exemple décrit dans le document WO 97/36724.

Le facteur de perte tan($\delta$) est une propriété dynamique de la couche de mélange caoutchouteux. Il est mesuré sur un viscoanalyseur (Metravib VA4000), selon la norme ASTM D 5992-96. On enregistre la réponse d'un échantillon de composition vulcanisée (éprouvette cylindrique de 4 mm d'épaisseur et de 400 mm$^2$ de section), soumis à une sollicitation sinusoïdale en cisaillement simple alterné, à la fréquence de 10Hz, à une température de 60°C. On effectue un balayage en amplitude de déformation de 0,1 à 50% (cycle aller), puis de 50% à 1% (cycle retour). Pour le cycle retour, on indique la valeur maximale de tan($\delta$) observée, noté tan($\delta$)$_{max}$.

La résistance au roulement est la résistance qui apparaît lorsque le pneumatique roule et révèle la montée en température dudit pneumatique. Elle est ainsi représentée par les pertes hystérétiques liées à la déformation du pneumatique durant une révolution. Les valeurs de tan($\delta$) des matériaux utilisés sont mesurées à 10Hz entre 30 et 100°C pour intégrer l'effet des différentes fréquences de déformation induites par la révolution du pneumatique. La valeur de tan($\delta$) à 60°C correspond ainsi à un indicateur de la résistance au roulement du pneumatique en roulage.

Il est encore possible d'estimer la résistance au roulement par la mesure des pertes d'énergie par rebond des échantillons à énergie imposée à des températures de 60 °C et exprimées en pourcentage.

Avantageusement selon l'invention, la perte à 60 °C, notée P60, de la première couche de mélange élastomérique chargé constituant la partie radialement extérieure de la bande de roulement est inférieure à 22 %.

Les essais de traction permettent de déterminer les contraintes d'élasticité et les propriétés à la rupture. Ils sont effectués conformément à la norme AFNOR- NF-T-46-002 de septembre 1988. On mesure en seconde élongation (i.e., après un cycle d'accommodation au taux d'extension prévu pour la mesure elle-même) le module sécant nominal (ou contrainte apparente, en MPa) à 100% d'allongement (notés MA100) ou à 10% d'allongement (notés MA10). Les mesures de traction pour déterminer les modules accomodés sécants sont effectuées à la température de 23°C +/-2°C, et dans les conditions normales d'hygrométrie (50 +/- 5% d'humidité relative), selon la norme française NF T 40-101 (décembre 1979).

Les contraintes à la rupture (en MPa) et les allongements à la rupture (en %) sont également mesurés. Les mesures de traction pour déterminer les propriétés de rupture sont effectuées à la température de 60°C $\pm$ 2°C, et dans les conditions normales d'hygrométrie (50 $\pm$ 5% d'humidité relative), selon la norme française NF T 40-101 (décembre 1979).

Avantageusement selon l'invention, l'énergie à la rupture de la deuxième couche de mélange élastomérique radialement intérieure à la dite première couche de mélange polymérique est supérieure à 165 MJ.

Les inventeurs ont tout d'abord su mettre en évidence que la combinaison d'un premier mélange élastomérique chargé présentant une note Z de macro dispersion supérieure à 80 et une valeur tan($\delta$)max inférieure à 0.130, comme matériau de la bande de roulement venant au contact du sol et d'un deuxième mélange élastomérique présentant un allongement à la rupture supérieur à 600 % comme matériau de la bande de roulement radialement plus intérieur, conduit à un compromis entre les propriétés de résistance à l'usure et les montées en température au niveau du sommet du pneumatique satisfaisant pour les usages routiers tels que décrits précédemment. En effet, même si le deuxième matériau radialement plus intérieur de la bande de roulement peut présenter des propriétés hystérétiques peu intéressantes au regard des montées en température du sommet du pneumatique, le choix du premier mélange élastomérique chargé présentant une note Z de macro dispersion supérieure à 80 permet de venir compenser les pertes hystérétiques plus élevées du matériau radialement plus intérieur de la bande roulement tout en préservant une bonne performance en usure.

Il s'avère donc que la bande de roulement est ainsi constituée d'au moins deux matériaux différents selon un agencement contraire aux pneumatiques usuellement réalisés tels qu'ils ont été présentés précédemment. En effet, contrairement aux pneumatiques plus usuels, le premier matériau radialement le plus extérieur de la bande de roulement peut permettre de satisfaire les propriétés hystérétiques recherchées pour le pneumatique si les pertes hystérétiques du deuxième matériau radialement plus intérieur sont trop élevées. Le pneumatique selon l'invention présente ainsi un empilage radial de matériaux élastomériques à l'opposé des pneumatiques usuels pour ce qui concerne les propriétés hystérétiques desdits matériaux. Comme expliqué précédemment, dans les pneumatiques plus usuels, la couche de mélange élastomérique radialement intérieure est effectivement introduite pour ses propriétés hystérétiques favorisant un moindre échauffement de la bande de roulement.

Les inventeurs ont encore su mettre en évidence que le deuxième mélange élastomérique radialement plus intérieur de la bande de roulement présentant un allongement à la rupture supérieur, autorise des distances parcourues avant rechapage plus importantes que celles réalisées avec des pneumatiques plus usuels.

Les inventeurs pensent avoir mis en évidence que lorsque la première couche de la bande de roulement est usée et donc que la bande de roulement devient moins épaisse, les pneumatiques deviennent plus sensibles à certains types d'agressions que sont notamment le ripage, les coupures, la pénétration de petits cailloux ou autres objets. Le ripage est une usure du pneumatique qui intervient notamment lors de roulage sur des ronds-points ou bien lors de manoeuvres sur parking. L'utilisation du deuxième mélange élastomérique radialement plus intérieur de la bande de roulement présentant un allongement à la rupture supérieur à 600 % conduit à une meilleure résistance à ce type d'agressions.

Selon un mode de réalisation préféré de l'invention, l'allongement à la rupture de la deuxième couche de mélange élastomérique radialement intérieure est supérieur à celui de la première couche de mélange élastomérique chargé constituant la partie radialement extérieure de la bande de roulement.

De préférence encore, l'énergie à la rupture de la deuxième couche de mélange élastomérique est supérieure à celle de la première couche de mélange élastomérique chargé constituant la partie radialement extérieure de la bande de roulement.

Selon une variante avantageuse de l'invention, le rapport du volume de la couche du deuxième mélange élastomérique sur la somme des volumes des premier et deuxième mélanges élastomériques est compris entre 25 et 70 %.

Le profil du deuxième mélange élastomérique vu selon une coupe méridienne du pneumatique est tel que celui-ci apparaisse sensiblement simultanément sur toute la largeur de la bande de roulement lors de l'usure de ladite bande de roulement. Le concepteur du pneumatique saura définir un tel profil en fonction de la dimension et de l'usage du pneumatique.

Avantageusement encore, le rapport de l'épaisseur, mesurée selon la direction radiale à l'extrémité de la couche de travail radialement la plus extérieure dans une coupe méridienne du pneumatique, de la couche du deuxième mélange élastomérique sur la somme des épaisseurs, mesurées selon la direction radiale à l'extrémité de la couche de travail radialement la plus extérieure dans une coupe méridienne du pneumatique, des premier et deuxième mélanges élastomériques est compris entre 15 et 50%.

Une variante avantageuse de l'invention prévoit encore la présence d'une couche d'un troisième mélange élastomérique radialement intérieure au deuxième mélange élastomérique et au contact de celui-ci, et présentant une valeur maximale de $\tan(\delta)$, noté $\tan(\delta)max$, inférieure à 0.100.

Avantageusement encore, la couche d'un troisième mélange élastomérique radialement intérieur au deuxième mélange élastomérique et au contact de celui-ci, présente une perte à 60 °C, notée P60, inférieure à 20 %.

La présence de cette troisième couche peut permettre de diminuer encore les montées en température de la bande de roulement lors de l'usage souhaité du pneumatique notamment lorsque le deuxième mélange élastomérique présente des propriétés hystérétiques tendant à augmenter ladite température.

La présence de cette troisième couche peut encore permettre de diminuer la température de fonctionnement du pneumatique dans la zone du sommet pour permettre de baisser la résistance au roulement du pneumatique.

Plus particulièrement dans le cas de pneumatique dont la sculpture est constituée de ribs parallèles, la troisième couche de mélange élastomérique est avantageusement discontinue. Elle est préférentiellement alors interrompue sous les rainures.

Selon ce dernier mode de réalisation, il est avantageusement possible d'effectuer un recreusage de la sculpture avant d'envisager un rechapage sans risque de voir apparaître en surface de la bande de roulement ladite troisième couche de mélange élastomérique.

Avantageusement selon ce dernier mode de réalisation, le rapport du volume de la couche du deuxième mélange élastomérique sur la somme des volumes des trois mélanges élastomériques est compris entre 20 et 40 %.

Avantageusement encore selon ce dernier mode de réalisation, le rapport du volume de la couche du troisième mélange élastomérique sur la somme des volumes des trois mélanges élastomériques est compris entre 10 et 30 %.

Selon ce dernier mode de réalisation, le rapport de l'épaisseur, mesurée selon la direction radiale à l'extrémité de la couche de travail radialement la plus extérieure dans une coupe méridienne du pneumatique, de la couche du deuxième mélange élastomérique sur la somme des épaisseurs, mesurées selon la direction radiale à l'extrémité de la couche de travail radialement la plus extérieure dans une coupe méridienne du pneumatique, des trois mélanges élastomériques est avantageusement compris entre 10 et 30 %.

Avantageusement encore selon ce dernier mode de réalisation, le rapport de l'épaisseur, mesurée selon la direction radiale à l'extrémité de la couche de travail radialement la plus extérieure dans une coupe méridienne du pneumatique, de la couche du troisième mélange élastomérique sur la somme des épaisseurs, mesurées selon la direction radiale à l'extrémité de la couche de travail radialement la plus extérieure dans une coupe méridienne du pneumatique, des trois mélanges élastomériques est compris entre 10 et 30 %.

Selon l'invention, les mesures de volume et d'épaisseurs précitées sont réalisées sur des pneumatiques à l'état neuf, n'ayant pas roulés et donc ne présentant aucune usure de la bande de roulement.

Selon un mode de réalisation de l'invention, l'armature de sommet du pneumatique est formée d'au moins deux couches de sommet de travail d'éléments de renforcement inextensibles, croisés d'une couche à l'autre en faisant avec la direction circonférentielle des angles compris entre 10° et 45°.

Selon d'autres modes de réalisation de l'invention, l'armature de sommet comporte encore au moins une couche d'éléments de renforcement circonférentiels.

Une réalisation de l'invention prévoit encore que l'armature de sommet est complétée radialement à l'extérieur par au moins une couche supplémentaire, dite de protection, d'éléments de renforcement dits élastiques, orientés par rapport à la direction circonférentielle avec un angle compris entre 10° et 45° et de même sens que l'angle formé par les éléments inextensibles de la couche de travail qui lui est radialement adjacente.

Selon l'un quelconque des modes de réalisation de l'invention évoqué précédemment, l'armature de sommet peut encore être complétée, radialement à l'intérieur entre l'armature de carcasse et la couche de travail radialement intérieure la plus proche de ladite armature de carcasse, par une couche de triangulation d'éléments de renforcement inextensibles métalliques en acier faisant, avec la direction circonférentielle, un angle supérieur à 60° et de même sens que celui de l'angle formé par les éléments de renforcement de la couche radialement la plus proche de l'armature de carcasse.

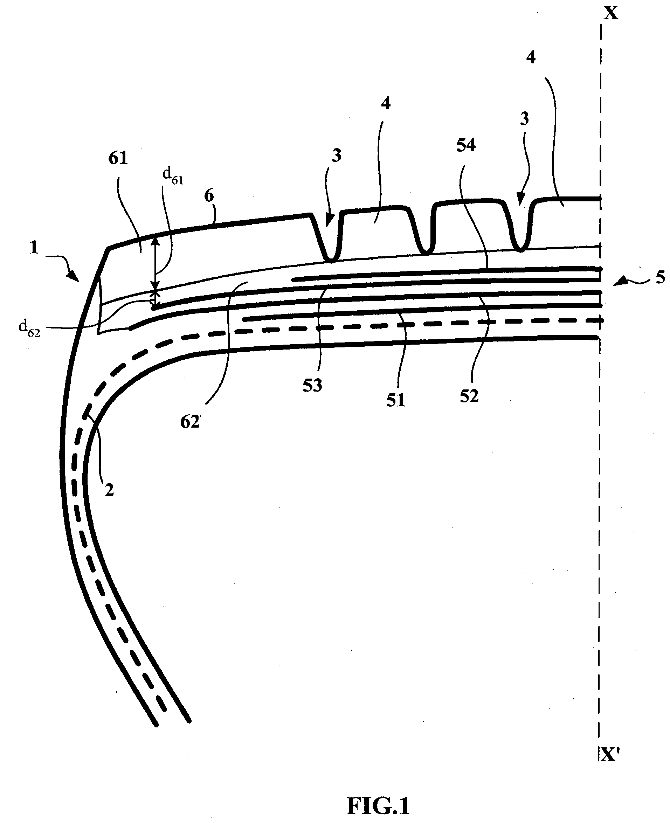

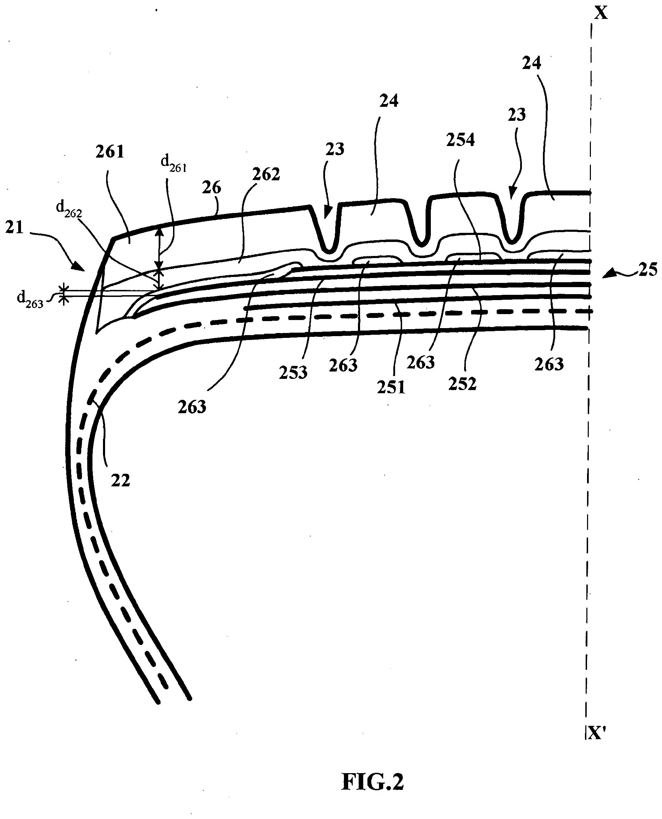

D'autres détails et caractéristiques avantageux de l'invention ressortiront ci-après de la description d'exemples de réalisation de l'invention en référence aux figures 1 et 2 qui représentent :

- figure 1, une vue méridienne d'un schéma d'un pneumatique selon un premier mode de réalisation de l'invention,

- figure 2, une vue méridienne d'un schéma d'un pneumatique selon un deuxième mode de réalisation de l'invention.

Les figures ne sont pas représentées à l'échelle pour en simplifier la compréhension. Les figures ne représentent qu'une demi-vue d'un pneumatique qui se prolonge de manière symétrique par rapport à l'axe XX' qui représente le plan médian circonférentiel, ou plan équatorial, d'un pneumatique.

Sur la figure 1, le pneumatique 1, de dimension 385/65 R 22.5, comprend une armature de carcasse radiale 2 ancrée dans deux bourrelets 3, autour de tringles 4. L'armature de carcasse 2 est formée d'une seule couche de câbles métalliques. L'armature de carcasse 2 est frettée par une armature de sommet 5, elle-même coiffée d'une bande de roulement 6. La bande de roulement comporte des rainures 7 formant des ribs 8.

Les zones basses et bourrelets du pneumatique 1 ne sont notamment pas représentés sur la figure 1.

Sur la figure 1, l'armature de sommet 5 est formée radialement de l'intérieur à l'extérieur :

- d'une couche de triangulation 51 formée de câbles métalliques inextensibles 9.35 non frettés, continus sur toute la largeur de la nappe, orientés d'un angle égal à 65°,

- d'une première couche de travail 52 formée de câbles métalliques inextensibles 11.35 non frettés, continus sur toute la largeur de la nappe, orientés d'un angle égal à 18°,

- d'une seconde couche de travail 53 formée de câbles métalliques inextensibles 11.35 non frettés, continus sur toute la largeur de la nappe, orientés d'un angle égal à 18° et croisés aux câbles métalliques de la première couche de travail,

- d'une couche de protection 54 formée de câbles métalliques élastiques 6.35 non frettés, continus sur toute la largeur de la nappe, orientés d'un angle égal à 18° dans le même sens que les câbles métalliques de la couche de travail 53.

Conformément à l'invention, la bande de roulement 6 est constituée d'une première couche 61 radialement extérieure qui vient au contact du sol et d'une couche 62 radialement intérieure.

La couche 61 est constituée d'un mélange élastomérique chargé présentant une note Z de macro dispersion égale à 90 et une valeur tan($\delta$)max égale à 0.126. Sa valeur de perte à 60, noté P60, est égale à 21 %.

La couche 62 est constituée d'un mélange élastomérique présentant un allongement à la rupture à 60°C égale à 650 %. La valeur de l'énergie à la rupture de la couche 62 est égale à 170 MJ. La valeur tan($\delta$)max est égale à 0.141.

Le ratio de la valeur tan($\delta$)max, du mélange élastomérique constituant la couche 61 sur la valeur tan($\delta$)max du mélange élastomérique constituant la couche 62 est égal à 0.89 et donc strictement inférieur à 1.

Le rapport du volume de la couche 62 du deuxième mélange élastomérique sur la somme des volumes des couches 61 et 62 est égal à 42 %.

Le rapport de l'épaisseur $d_{62}$, mesurée selon la direction radiale à l'extrémité de la couche de travail 53 radialement la plus extérieure, de la couche 62 sur la somme des épaisseurs $d_{61}$ et $d_{62}$, mesurées selon la direction radiale à l'extrémité de la couche de travail 53, des couches 61 et 62 est égal à 33 %.

La figure 2, conformément à une variante de réalisation de l'invention, représente un pneumatique 21 semblable à celui de la figure 1 et qui en diffère par la présence d'une troisième couche 263. Cette couche 263 est mise en place au contact de l'armature de sommet et radialement à l'intérieure de la couche 262. Cette couche 263 est en outre interrompue radialement sous les rainures pour permettre des étapes de recreusage avant d'envisager les étapes de rechapages afin de recréer des sculptures sans risque de faire apparaître la couche 263 en surface de la bande de roulement.

La couche 263 est constituée d'un mélange élastomérique présentant une valeur maximale de tan($\delta$), noté tan($\delta$)max, égale à 0.075.

La couche 263 présente une perte à 60 °C, notée P60, égale à 13%.

Le rapport du volume de la couche 262 sur la somme des volumes des couches 261, 262 et 263 est égal à 26 %.

Le rapport du volume de la couche 263 sur la somme des volumes des trois couches 261, 262 et 263 est égal à 10 %.

Le rapport de l'épaisseur $d_{262}$, mesurée selon la direction radiale à l'extrémité de la couche de travail 253, de la couche 262 sur la somme des épaisseurs $d_{261}$, $d_{262}$ et $d_{263}$, mesurées selon la direction radiale à l'extrémité de la couche 253, des trois couches 261, 262 et 263 est égal à 17 %.

Le rapport de l'épaisseur $d_{263}$, mesurée selon la direction radiale à l'extrémité de la couche de travail 253, de la couche 263 sur la somme des épaisseurs $d_{261}$, $d_{262}$ et $d_{263}$, mesurées selon la direction radiale à l'extrémité de la couche 253, des trois couches 261, 262 et 263 est égal à 13 %.

Quatre pneumatiques ont été réalisés sur la base des trois mélanges élastomériques décrits ci-dessous avec certaines de leurs propriétés.

| | Mélange A | Mélange B | Mélange C |
|---|---|---|---|
| NR | 100 | 100 | 100 |
| Noir N234 | 50 | | |
| Noir N220 | | 47.5 | |
| Noir N330 | | | 35 |
| Silice 165G | | | 10 |
| Antioxydant (6PPD) | 2 | 1.5 | 1 |
| Acide stéarique | 2.5 | 2.5 | 1.5 |
| Oxyde de zinc | 2.7 | 2.7 | 4.5 |
| Triméthyl quinoléine | 1 | 1 | |
| Paraffine 6266 | 1 | 1 | |
| Silane sur noir | | | 2 |
| soufre | 1.7 | 1.5 | 1.6 |
| Accélérateur CBS | 0.7 | 0.6 | 1.5 |
| Note Z | 90 | 73 | 40 |
| $MA_{10}$ (MPa) | 4.7 | 4.7 | 4.4 |
| $MA_{100}$ (MPa) | 1.7 | 1.75 | 2.1 |
| Allongement à la rupture (% à 60°C) | 580 | 650 | 535 |
| Energie à la rupture (MJ) | 162 | 170 | 142 |
| $\tan(\delta)_{max}$ | 0.126 | 0.141 | 0.075 |
| P60 (%) | 21 | 23.5 | 13 |

Le premier pneumatique est un pneumatique de référence R1 réalisé selon une configuration proche de la représentation de la figure 1 mais correspondant à des réalisations usuelles telles que décrites précédemment. Il associe un mélange B présent radialement à l'extérieur de la bande de roulement et un mélange C radialement intérieur. Le volume du mélange C est défini usuellement par l'homme du métier pour que la température de fonctionnement du pneumatique corresponde au roulage envisagé avec un tel pneumatique. Dans le cas présent, le volume du mélange C représente 10 % de la somme des volumes des mélanges B et C.

Un deuxième pneumatique de référence R2 a été réalisé bien que ce pneumatique ne corresponde à aucun pneumatique usuel. La bande de roulement de ce pneumatique R2 est constituée uniquement du mélange A.

Un premier pneumatique T1 conforme à l'invention et plus particulièrement au cas de la figure 1 associe, pour former la bande de roulement, le mélange A qui forme la partie radialement extérieure, et le mélange B, qui forme la partie radialement intérieure de la bande de roulement.

Le rapport du volume du mélange B du deuxième mélange élastomérique sur la somme des volumes des mélanges A et B est égal à 42 %.

Le deuxième pneumatique T2 réalisée conformément à l'invention s'apparente à celui de la figure 2. La bande de roulement du pneumatique T2 est constituée radialement depuis l'extérieur d'une couche du mélange A, d'une couche du mélange B et d'une couche interrompue du mélange C.

Le rapport du volume du mélange B sur la somme des volumes des mélanges A, B et C est égal à 26 %.

Le rapport du volume du mélange C sur la somme des volumes des trois mélanges A, B et C est égal à 10 %.

Pour effectuer une comparaison, des essais similaires sont effectués avec les quatre pneumatiques.

Les premiers essais ont consisté à évaluer la distance parcourue par les pneumatiques avant d'effectuer un rechapage.

Les essais sont réalisés dans des conditions de charge et vitesse définis pour conduire à une usure et à des agressions de la bande de roulement du pneumatique de référence R1 autorisant son rechapage après un kilométrage, auquel on attribue la valeur 100, parcouru dans lesdites conditions de ce test. La performance en usure est évaluée sur un véhicule poids lourd lors de roulages sur route ouverte sur des parcours représentatifs des usages classiquement observés sur des véhicules poids lourd. La performance en agression est évaluée sur un véhicule poids lourd en configuration de manoeuvre sur un sol présentant des aspérités.

Les résultats obtenus sont présentés dans le tableau suivant :

|  | Pneumatique R1 | Pneumatique R2 | Pneumatique T1 | Pneumatique T2 |
|---|---|---|---|---|
| Usure | 100 | 120 | 115 | 115 |
| Agressions | 100 | 85 | 100 | 100 |

Ces résultats montrent que les pneumatiques selon l'invention autorisent un roulage plus important avant d'effectuer un rechapage. Comme évoqué précédemment, la présence du mélange B radialement intérieur au mélange A limite les agressions et permet de rouler plus longtemps et apporte une meilleure résistance à l'usure et aux agressions due notamment aux phénomènes de ripage intervenant lorsque l'usure de la bande de roulement est déjà très avancée.

Des mesures de résistance au roulement ont également été effectuées sur chacun des quatre pneumatiques dans des conditions de roulage identiques et sur un cinquième pneumatique noté R0, qui diffère des autre pneumatiques par une bande de roulement constituée du seul mélange B. Les résultats des mesures sont présentés dans le tableau suivant ; elles sont exprimées en Kg/t, une valeur de 100 étant attribuée au pneumatique R1.

| Pneumatique R0 | Pneumatique R1 | Pneumatique R2 | Pneumatique T1 | Pneumatique T2 |
|---|---|---|---|---|
| 108 | 100 | 101 | 103 | 95 |

Ces valeurs mettent en évidence l'intérêt de l'utilisation du mélange A pour limiter la résistance au roulement du pneumatique, notamment en comparaison du mélange B usuellement utilisé en surface de la bande de roulement.

En effet, si la résistance au roulement du pneumatique T1 est légèrement supérieure à celle du pneumatique R1, le gain en usure conduit à un compromis entre l'usure, la résistance aux agressions et la résistance au roulement nettement favorable au pneumatique T1.

La synthèse des deux tableaux montre qu'une bande de roulement constituée du seul mélange A offre un compromis entre l'usure, la résistance aux agressions et la résistance au roulement peu intéressant. En outre, le mélange A présente un coût notamment du fait de son mode de préparation plus élevée qu'un mélange plus usuel de type B ou C.

La comparaison des pneumatiques T1 et T2 montrent que la présence d'une couche C interrompue peut présenter un intérêt non négligeable en termes de résistance au roulement tout en conservant des propriétés en usure et en agressions satisfaisantes. En outre, le coût de fabrication du pneumatique T2 peut être inférieur à celui du pneumatique T1, notamment si la bande de roulement est réalisée de la même façon pour les deux pneumatiques. Il peut par exemple s'agir d'une méthode de co-extrusion des mélanges qui permet de réaliser la bande de roulement avec différents mélanges, ceux-ci formant des coches continues ou discontinues. Dans le cas du pneumatique T1, il s'agit d'une bi-extrusion (extrusion simultanée de deux mélanges A et B) alors que dans le cas du pneumatique T2, il s'agit d'une tri-extrusion (extrusion simultanée des trois mélanges A, B et C).

En outre, la présence de la couche de mélange C étant interrompue sous les rainures, il est possible d'effectuer une étape de recreusage pour recréer des rainures avant d'envisager l'étape de rechapage. De ce point de vue, la présence de la couche de mélange C ne pénalise donc pas le pneumatique T2 en comparaison du pneumatique T1.

**Revendications**

1. Pneumatique (1), à armature de carcasse radiale (2), comprenant une armature de sommet (5), elle-même coiffée radialement d'une bande de roulement (6) réunie à deux bourrelets par l'intermédiaire de deux flancs, ladite bande de roulement comprenant au moins deux couches (61, 62) de mélange polymérique radialement superposées, **caractérisé en ce qu'**une première couche (61) de mélange élastomérique chargé constituant la partie radialement extérieure de la bande de roulement présente une note Z de macro dispersion, mesurée, après réticulation, selon la méthode décrite par S. Otto et Al dans Kautschuk Gummi Kunststoffe, 58 Jahrgang, NR 7-8/2005, en accord avec la norme ISO 11345, supérieure à 80 et une valeur maximale de $\tan(\delta)$ mesurée à 60°C, noté $\tan(\delta)$max, inférieure à 0.130, **en ce qu'**une deuxième couche (62) de mélange élastomérique radialement intérieur à la dite première couche (61) de mélange élastomérique présente un allongement à la rupture à 60°C supérieure à 600 % et **en ce que** le ratio de la valeur maximale de $\tan(\delta)$, noté $\tan(\delta)$max, du mélange élastomérique constituant la première couche (61) sur la valeur maximale de $\tan(\delta)$, noté $\tan(\delta)$max, du mélange élastomérique constituant la deuxième couche (62) est strictement inférieur à 1.

2. Pneumatique (1) selon la revendication 1, **caractérisé en ce que** l'énergie à la rupture de la deuxième couche (62) de mélange élastomérique radialement intérieur à la dite première couche (61) de mélange polymérique est supérieure à 165 MJ.

3. Pneumatique (1) selon l'une des revendications 1 ou 2, **caractérisé en ce que** l'allongement à la rupture de la deuxième couche (62) de mélange élastomérique radialement intérieur est supérieur à celui de la première couche (61) de mélange élastomérique chargé constituant la partie radialement extérieure de la bande de roulement (6).

4. Pneumatique (1) selon l'une des revendications 1 à 3, **caractérisé en ce que** l'énergie à la rupture de la deuxième couche (62) de mélange élastomérique est supérieure à celui de la première couche (61) de mélange élastomérique chargé constituant la partie radialement extérieure de la bande de roulement (6).

5. Pneumatique (1) selon l'une des revendications 1 à 4, **caractérisé en ce que** le rapport du volume de la couche (62) du deuxième mélange élastomérique sur la somme des volumes des premier et deuxième mélanges élastomériques est compris entre 25 et 45 %.

6. Pneumatique (1) selon l'une des revendications précédentes, **caractérisé en ce que** le rapport de l'épaisseur ($d_{62}$), mesurée selon la direction radiale à l'extrémité de la couche de travail (53) radialement la plus extérieure dans une coupe méridienne du pneumatique, de la couche (62) du deuxième mélange élastomérique sur la somme des épaisseurs ($d_{61} + d_{62}$), mesurées selon la direction radiale à l'extrémité de la couche (53) de travail radialement la plus extérieure dans une coupe méridienne du pneumatique, des premier et deuxième mélanges élastomériques est compris entre 15 et 35 %.

7. Pneumatique (21) selon l'une des revendications précédentes, **caractérisé en ce que** ledit pneumatique comprend une couche (263) d'un troisième mélange élastomérique radialement intérieur au deuxième mélange élastomérique et au contact de celui-ci, et **en ce que** ladite couche (263) d'un troisième mélange élastomérique présente une valeur maximale de $\tan(\delta)$, noté $\tan(\delta)$max, inférieure à 0.100.

8. Pneumatique (21) selon la revendication 7, **caractérisé en ce que** le rapport du volume de la couche (262) du deuxième mélange élastomérique sur la somme des volumes des trois mélanges élastomériques est compris entre 20 et 30 %.

9. Pneumatique (21) selon l'une des revendications 7 ou 8, **caractérisé en ce que** le rapport du volume de la couche (263) du troisième mélange élastomérique sur la somme des volumes des trois mélanges élastomériques est compris entre 10 et 20 %.

10. Pneumatique (21) selon l'une des revendications 7 à 9, **caractérisé en ce que** le rapport de l'épaisseur ($d_{262}$), mesurée selon la direction radiale à l'extrémité de la couche de travail (253) radialement la plus extérieure dans une coupe méridienne du pneumatique, de la couche (262) du deuxième mélange élastomérique sur la somme des épaisseurs ($d_{261} + d_{262} + d_{263}$), mesurées selon la direction radiale à l'extrémité de la couche de travail (253) radialement la plus extérieure dans une coupe méridienne du pneumatique, des trois mélanges élastomériques est compris entre 10 et 20 %.

11. Pneumatique (21) selon l'une des revendications 7 à 10, **caractérisé en ce que** le rapport de l'épaisseur ($d_{263}$), mesurée selon la direction radiale à l'extrémité de la couche de travail (253) radialement la plus extérieure dans une coupe méridienne du pneumatique, de la couche (263) du troisième mélange élastomérique sur la somme des épaisseurs ($d_{261} + d_{262} + d_{263}$), mesurées selon la direction radiale à l'extrémité de la couche de travail (253) radialement la plus extérieure dans une coupe méridienne du pneumatique, des trois mélanges élastomériques est compris entre 10 et 20 %.

**Patentansprüche**

1. Reifen (1) mit radialer Karkassenbewehrung (2), aufweisend eine Scheitelbewehrung (5), welche selbst von einer mit Hilfe von zwei Flanken mit zwei Wülsten verbundenen Lauffläche (6) radial überdeckt wird, wobei die Lauffläche mindestens zwei radial übereinander gelegte Schichten (61, 62) aus Polymergemisch aufweist, **dadurch gekennzeichnet, dass** eine erste Schicht (61) aus angereichertem Polymergemisch, welche den radial äußeren Bereich der Lauffläche bildet, einen Z Wert der Makrodispersion, welcher nach dem von S. Otto et Al in Kautschuk Gummi Kunststoffe, 58 Jahrgang, NR 7-8/2005 beschriebenen Verfahren in Übereinstimmung mit der Norm ISO 11345 gemessen wird, von größer als 80 und einen maximalen Wert von tan($\delta$), gemessen bei 60°C, welcher als tan($\delta$)max bezeichnet wird, von kleiner als 0,130 aufweist, dass eine zweite, zur ersten Schicht (61) aus Polymergemisch radial innere Schicht (62) aus Polymergemisch eine Bruchdehnung bei 60°C von größer als 600 % aufweist und, dass der Quotient aus dem maximalen Wert von tan($\delta$), welcher als tan($\delta$)max bezeichnet wird, des die erste Schicht (61) bildenden Polymergemisches und dem maximalen Wert von tan($\delta$), welcher als tan($\delta$)max bezeichnet wird, des die zweite Schicht (62) bildenden Polymergemisches unbedingt kleiner als 1 ist.

2. Reifen (1) nach Anspruch 1, **dadurch gekennzeichnet, dass** die Energie bis zum Bruch der zweiten, zur ersten Schicht (61) aus Polymergemisch radial inneren Schicht (62) aus Polymergemisch größer als 165 MJ ist.

3. Reifen (1) nach einem der Ansprüche 1 oder 2, **dadurch gekennzeichnet, dass** die Bruchdehnung der zweiten, radial inneren Schicht (62) aus Polymergemisch größer als diejenige der ersten Schicht (61) aus angereichertem Polymergemisch ist, welche den radial äußeren Teil der Lauffläche (6) bildet.

4. Reifen (1) nach einem der Ansprüche 1 bis 3, **dadurch gekennzeichnet, dass** die Energie bis zum Bruch der zweiten Schicht (62) aus Polymergemisch größer als diejenige der ersten Schicht (61) aus angereichertem Polymergemisch ist, welche den radial äußeren Teil der Lauffläche (6) bildet.

5. Reifen (1) nach einem der Ansprüche 1 bis 4, **dadurch gekennzeichnet, dass** das Verhältnis des Volumens der Schicht (62) des zweiten Elastomergemisches zur Summe der Volumen des ersten und zweiten Elastomergemisches zwischen 25 und 45 % liegt.

6. Reifen (1) nach einem der vorhergehenden Ansprüche, **dadurch gekennzeichnet, dass** das Verhältnis der Dicke ($d_{61}$) der Schicht (62) des zweiten Elastomergemisches, welche gemäß der radialen Richtung am radial äußersten Ende der Arbeitsschicht (53) in einem Mittelschnitt des Reifens gemessen wird, zur Summe aus den Dicken ($d_{61}$ + $d_{62}$) des ersten und zweiten Elastomergemisches, welche gemäß der radialen Richtung am radial äußersten Ende der Arbeitsschicht (53) in einem Mittelschnitt des Reifens gemessen werden, zwischen 15 und 35 % liegt.

7. Reifen (21) nach einem der vorhergehenden Ansprüche, **dadurch gekennzeichnet, dass** der Reifen eine Schicht (236) aus einem zum zweiten Elastomergemisch radial inneren und mit diesem in Kontakt stehenden dritten Elastomergemisch aufweist, und dass die Schicht (263) eines dritten Elastomergemisches einen maximalen Wert von tan($\delta$), welcher als tan($\delta$)max bezeichnet wird, von kleiner als 0,100 aufweist.

8. Reifen (21) nach Anspruch 7, **dadurch gekennzeichnet, dass** das Verhältnis des Volumens der Schicht (262) des zweiten Elastomergemisches zur Summe der Volumen der drei Elastomergemische zwischen 20 und 30 % liegt.

9. Reifen (21) nach einem der Ansprüche 7 oder 8, **dadurch gekennzeichnet, dass** das Verhältnis des Volumens der Schicht (263) des dritten Elastomergemisches zur Summe der Volumen der drei Elastomergemische zwischen 10 und 20 % liegt.

10. Reifen (21) nach einem der Ansprüche 7 bis 9, **dadurch gekennzeichnet, dass** das Verhältnis der Dicke ($d_{262}$) der Schicht (262) des zweiten Elastomergemisches, welche gemäß der radialen Richtung am radial äußersten Ende der Arbeitsschicht (253) in einem Mittelschnitt des Reifens gemessen wird, zur Summe aus den Dicken ($d_{261}$ + $d_{262}$ + $d_{263}$) der drei Elastomergemische, welche gemäß der radialen Richtung am radial äußersten Ende der Arbeitsschicht (253) in einem Mittelschnitt des Reifens gemessen werden, zwischen 10 und 20 % liegt.

11. Reifen (21) nach einem der Ansprüche 7 bis 10, **dadurch gekennzeichnet, dass** das Verhältnis der Dicke ($d_{263}$)

der Schicht (263) des dritten Elastomergemisches, welche gemäß der radialen Richtung am radial äußersten Ende der Arbeitsschicht (253) in einem Mittelschnitt des Reifens gemessen wird, zur Summe aus den Dicken ($d_{261}$ + $d_{262}$ +$d_{263}$) der drei Elastomergemische, welche gemäß der radialen Richtung am radial äußersten Ende der Arbeitsschicht (253) in einem Mittelschnitt des Reifens gemessen werden, zwischen 10 und 20 % liegt.

**Claims**

1.  Tyre (1) with radial carcass reinforcement (2), comprising a crown reinforcement (5), itself capped radially by a tread (6) connected to two beads by two sidewalls, the said tread comprising at least two radially superposed layers (61, 62) of polymer compound, **characterized in that** a first layer (61) of filled elastomeric compound, constituting the radially outer part of the tread, has a macrodispersion score Z, measured, after crosslinking, using the method described by S. Otto et al. in Kautschuk Gummi Kunststoffe, 58 Jahrgang, NR 7-8/2005, in accordance with standard ISO 11345, higher than 80 and a maximum $\tan(\delta)$ value measured at 60°C, denoted $\tan(\delta)max$, lower than 0.130, **in that** a second layer (62) of elastomeric compound radially on the inside of the said first layer (61) of elastomeric compound has an elongation at break at 60°C that is higher than 600% and **in that** the ratio of the maximum value of $\tan(\delta)$, denoted $\tan(\delta)max$, of the elastomeric compound that constitutes the first layer (61) to the maximum value of $\tan(\delta)$, denoted $\tan(\delta)max$, of the elastomeric compound that constitutes the second layer (62) is strictly lower than 1.

2.  Tyre (1) according to Claim 1, **characterized in that** the energy at break of the second layer (62) of elastomeric compound radially on the inside of the said first layer (61) of polymeric compound is higher than 165 MJ.

3.  Tyre (1) according to one of Claims 1 or 2, **characterized in that** the elongation at break of the second layer (62) of elastomeric compound radially on the inside is higher than that of the first layer (61) of filled elastomeric compound constituting the radially outer part of the tread (6).

4.  Tyre (1) according to one of Claims 1 to 3, **characterized in that** the energy at break of the second layer (62) of elastomeric compound is higher than that of the first layer (61) of filled elastomeric compound that constitutes the radially outer part of the tread (6).

5.  Tyre (1) according to one of Claims 1 to 4, **characterized in that** the ratio of the volume of the layer (62) of the second elastomeric compound to the sum of the volumes of the first and second elastomeric compounds is comprised between 25 and 45%.

6.  Tyre (1) according to one of the preceding claims, **characterized in that** the ratio of the thickness ($d_{61}$), measured in the radial direction at the end of the radially outermost working layer (53) in a meridian section of the tyre, of the layer (62) of the second elastomeric compound to the sum of the thicknesses ($d_{61}$ + $d_{62}$), measured in the radial direction at the end of the radially outermost working layer (53) in a meridian section of the tyre, of the first and second elastomeric compounds is comprised between 15 and 35%.

7.  Tyre (21) according to one of the preceding claims, **characterized in that** the said tyre comprises a layer (263) of a third elastomeric compound radially on the inside of the second elastomeric compound and in contact therewith, and **in that** the said layer (263) of a third elastomeric compound has a maximum value of $\tan(\delta)$, denoted $\tan(\delta)max$, lower than 0.100.

8.  Tyre (21) according to Claim 7, **characterized in that** the ratio of the volume of the layer (262) of the second elastomeric compound to the sum of the volumes of the three elastomeric compounds is comprised between 20 and 30%.

9.  Tyre according to one of Claims 7 or 8, **characterized in that** the ratio of the volume of the layer (263) of the third elastomeric compound to the sum of the volumes of the three elastomeric compounds is comprised between 10 and 20%.

10. Tyre (21) according to one of Claims 7 to 9, **characterized in that** the ratio of the thickness ($d_{262}$), measured in the radial direction at the end of the radially outermost working layer (253) in a meridian section of the tyre, of the layer (262) of the second elastomeric compound to the sum of the thicknesses ($d_{261}$ + $d_{262}$ +$d_{263}$), measured in the radial direction at the end of the radially outermost working layer (253) in a meridian section of the tyre, of the three elastomeric compounds is comprised between 10 and 20%.

11. Tyre (21) according to one of Claims 7 to 10, **characterized in that** the ratio of the thickness ($d_{263}$), measured in the radial direction at the end of the radially outermost working layer (253) in a meridian section of the tyre, of the layer (263) of the third elastomeric compound to the sum of the thicknesses ($d_{261} + d_{262} + d_{263}$), measured in the radial direction at the end of the radially outermost working layer (253) in a meridian section of the tyre, of the three elastomeric compounds is comprised between 10 and 20%.

**FIG.1**

**FIG.2**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 1389428
- FR 2222232
- FR 2728510
- WO 9924269 A
- US 6247512 B
- WO 2009057857 A
- EP 1897702 A
- JP 11060810 B
- WO 9736724 A

**Littérature non-brevet citée dans la description**

- **S. OTTO et al.** *Kautschuk Gummi Kunststoffe*